## Europäisches Patentamt

(19) **European Patent Office**

**Office européen des brevets**

(11) Veröffentlichungsnummer: **0 257 372**
**B1**

(12) # EUROPÄISCHE PATENTSCHRIFT

(45) Veröffentlichungstag der Patentschrift:
02.11.89

(51) Int. Cl.⁴: **B23B 51/06**

(21) Anmeldenummer: **87111232.2**

(22) Anmeldetag: **04.08.87**

(54) **Einteiliges spanabhebendes Werkzeug.**

(30) Priorität: **27.08.86 DE 3629035**

(43) Veröffentlichungstag der Anmeldung:
**02.03.88 Patentblatt 88/9**

(45) Bekanntmachung des Hinweises auf die Patenterteilung:
**02.11.89 Patentblatt 89/44**

(84) Benannte Vertragsstaaten:
**AT BE CH DE ES FR GB IT LI LU NL SE**

(56) Entgegenhaltungen:
**EP-A- 0 118 035**
**EP-A- 0 127 009**
**EP-A- 0 185 637**
**EP-A- 0 223 909**
**DE-A- 1 752 616**
**US-A- 3 504 575**

(73) Patentinhaber: **STELLRAM S.A., Route de l'Etraz,
CH-1260 Nyon, Vaud(CH)**

(72) Erfinder: **Grunsky, Manfred, 54,
Philipp-Holzmann-Strasse, D-6072 Dreieich(DE)**

(74) Vertreter: **Köhler, Günter, Dipl.-Ing., Nordring 1,
D-6458 Rodenbach(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein einteiliges spanabhebendes Werkzeug, wie Bohrer oder Fingerfräser, aus gesintertem Hartmetall, der stirnseitig angeschliffene Schneidkanten, in den Längsseiten ausgebildete Spanabführungsnuten und einen Einspannabschnitt am hinteren Ende zur Aufnahme in einer diesem angepaßten Aufnahmeöffnung eines Halters aufweist und der über seine gesamte Länge im Strangpreßverfahren geformt ist.

Bei Bohrern aus gesintertem Hartmetall pflegte man zunächst zu einer zylindrischen Form gepreßte und gesinterte Rohlinge herzustellen, in die dann die Spanabführungsnuten durch spanabhebende Bearbeitung eingearbeitet wurden, wobei der hintere Endabschnitt eine zylindrische Form beibehielt, um ihn in ein Bohrfutter einzuspannen. Die hierbei erforderliche spanabhebende Bearbeitung ist aufwendig und ergibt einen Materialabfall.

Bei dem gattungsgemäßen bekannten Hartmetall-Bohrer (DE-A 17 52616) entfällt die spanabhebende Bearbeitung zur Ausbildung der Spanabführungsnuten. Dagegen besteht jedoch die Gefahr einer Überhitzung der Schneidkanten beim Bohren, da keine Kühlung vorgesehen ist. Sodann wird das Ende des Bohrers in einen zylindrischen Halter gepreßt, so daß die Kanten der Spanabführungsnuten in die Wand des Halters einschneiden. Das Einsetzen des Bohrers in den Halter bei einem Bohrerwechsel ist daher schwierig.

Man hat auch schon innenliegende Kühlkanäle in Bohrern ausgebildet, die im Strangpreßverfahren, jedoch aus hohlzylindrisch vorgeformten Rohlingen hergestellt werden (DE-A 25 12 854). Hierbei ist die Vorfertigung der Rohlinge aufwendiger als das Strangpressen aus Sintermaterial. Sodann ist die weitere Verformung des vorgefertigten Rohlings durch Strangpressen energieaufwendig. Zum Einspannen des Bohrers ist dieser mit einem konischen Endabschnitt (Schaftteil) versehen, der nachträglich angelötet oder angeschweißt wird. Dies erfordert zum einen eine getrennte Herstellung und zum anderen eine spezielle Ausbildung des Endabschnitts, um sicherzustellen, daß das Kühlmittel genau in die Kühlkanäle des Bohrers geleitet wird, aber nicht an der Verbindungsstelle austritt. Beim Zusammenschweißen ergibt sich ferner die Schwierigkeit, dafür zu sorgen, daß die Kühlkanäle durch das Schweißen nicht versperrt werden.

Zwar ist es bekannt (DE-A 16 27 778), bei Bohrern mit vorgebohrten Kühlmittelkanälen das Versperren der Kühlmittelkanäle beim Anschweißen eines konischen Schaftteils dadurch zu verhindern, daß die Kühlmittelkanäle vorher mit Lot gefüllt werden, das beim Anschweißen wegschmilzt. Auch hierbei ist jedoch die getrennte Herstellung eines konischen Schaftteils und das vorherige Bohren von Kühlmittelkanälen erforderlich, abgesehen von dem zusätzlichen Arbeitsaufwand des Füllens der Kühlmittelkanäle mit Lot und des Anschweißens des konischen Schaftteils.

Der Erfindung liegt die Aufgabe zugrunde, ein Werkzeug der gattungsgemäßen Art anzugeben, das bei einfacher Herstellbarkeit und festem Sitz im Halter leicht auswechselbar ist und eine wirksame Kühlung während des Betriebs gestattet.

Erfindungsgemäß ist diese Aufgabe dadurch gelöst, daß das Werkzeug beim Strangpressen ausgebildete, über seine gesamte axiale Länge durchgehende Löcher als Kühlmittelkanäle aufweist, daß die Spanabführungsnuten im Bereich des Einspannabschnitts mit einem Füllmaterial ausgefüllt sind und daß der Einspannabschnitt konisch geschliffen ist.

Hierbei wird das Werkzeug mitsamt den Kühlmittelkanälen ohne vorherige Ausbildung eines Rohlings in einem Arbeitsgang geformt. Der konische Endabschnitt (Schaftteil) braucht nicht getrennt hergestellt zu werden. Aufgrund der konischen Form des Endabschnitts kann das Werkzeug leicht in einen entsprechend geformten Innenkonus eines Halters eingesetzt und gegebenenfalls ausgewechselt werden, wobei das Werkzeug im Halter im Reibschluß gehalten wird, der sich beim Bohren durch den Axialdruck erhöht. Das Anschleifen des konischen Endabschnitts erfolgt vorzugsweise nach dem Einfüllen des Füllmaterials, so daß dieses gleichzeitig in die konische Form gebracht wird. Das Füllmaterial stellt nicht nur sicher, daß der konische Endabschnitt auch im Bereich der Spanabführungsnuten, soweit diese nicht weggeschliffen werden, reibschlüssig am Innenkonus des Halters anliegt, sondern verhindert auch einen Austritt des Kühlmittels, das dem Halter über eine koaxiale Bohrung zugeführt wird, über die Spanabführungsnuten.

Vorzugsweise ist ferner dafür gesorgt, daß die außerhalb der Spanabführungsnuten liegenden Längsseitenbereiche des Bohrers jeweils wenigstens eine beim Strangpressen ausgebildete Führungsrippe aufweisen und der an die Führungsrippe angrenzende Raum bzw. die Nuten zwischen den Führungsrippen im Bereich des Einspannabschnitts mit Füllmaterial ausgefüllt ist bzw. sind. Diese Führungsrippen bewirken eine Verminderung der Reibung zwischen den Längsseitenbereichen des Bohrers und des Bohrlochs, und das Füllmaterial im angrenzenden Raum bzw. zwischen den Führungsrippen verhindert einen Austritt des Kühlmittels über den angrenzenden Raum bzw. die zwischen den Führungsrippen gebildete Nut aus dem Halter.

Bei dem Füllmaterial handelt es sich vorzugsweise um mit Metall verklebbaren Kunststoff oder Lot. Dieses Material läßt sich leicht in den Nuten einbringen und gleichzeitig mit dem Hartmetall schleifen.

Sodann kann die Querschnittsform der Kühlmittelkanäle etwa dreieckförmig sein und die eine Ecke näher bei der Längsmittelachse als die beiden anderen Ecken und innerhalb eines Umkreises um die Längsmittelachse liegen, der den tiefsten Querschnittspunkt der Spanabführungsnuten tangiert. Diese Ausbildung stellt sicher, daß die Kühlmittelkanäle möglichst weit radial innen liegen und auch bei einem längeren konischen Einspannabschnitt am Werkzeug und entsprechend längerem Innenkonus des Halters nicht an ihrem im Halter liegenden Ende durch den Innenkonus verdeckt werden, aber dennoch eine verhältnismäßig große Querschnittsfläche für den Kühlmitteldurchtritt haben. Ferner kann das Werkzeug als Stufenbohrer zur Ausbildung abgestufter Bohrungen ausgebildet sein, bei dem die Differenz der Durchmesser der einzelnen Bohrungsstufen verhältnismäßig groß ist.

Die Erfindung und ihre Weiterbildungen werden nachstehend anhand der Zeichnung bevorzugter Ausführungsbeispiele näher beschrieben. Es zeigen:

Fig. 1 ein erstes Ausführungsbeispiel eines erfindungsgemäßen Bohrers in perspektivischer Darstellung,

Fig. 2 eine Vorderansicht des Bohrers nach Fig. 1,

Fig. 3 eine Seitenansicht des Bohrers nach Fig. 1 in einem axial geschnittenen Halter,

Fig. 4 einen Querschnitt des Bohrers nach Fig. 1,

Fig. 5 einen Querschnitt eines zweiten Ausführungsbeispiels eines erfindungsgemäßen Bohrers,

Fig. 6 einen Querschnitt eines dritten Ausführungsbeispiels eines erfindungsgemäßen Bohrers,

Fig. 7 einen Querschnitt eines vierten Ausführungsbeispiels eines erfindungsgemäßen Bohrers und

Fig. 8 die Vorderansicht eines fünften Ausführungsbeispiels eines erfindungsgemäßen Stufenbohrers mit schematisch in die gleiche Zeichenebene geklappter, strichpunktiert dargestellter Seitenansicht seines abgestuften vorderen Endabschnitts.

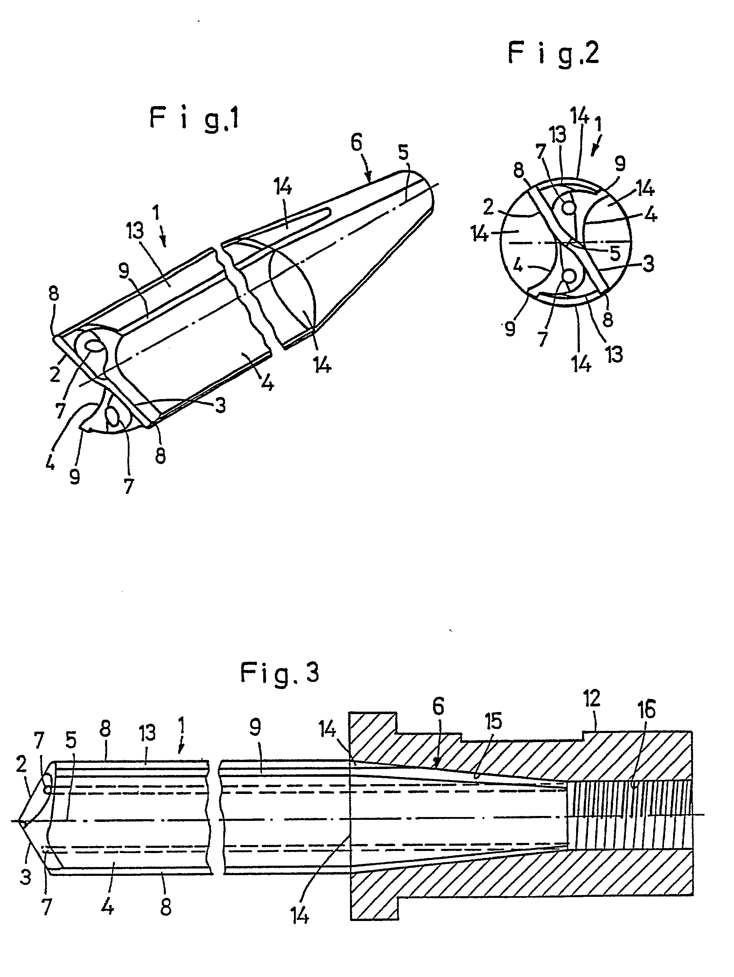

Der Bohrer 1 nach den Fig. 1 bis 4 besteht durchgehend aus gesintertem Hartmetall und ist, bis auf angeschliffene Flächen und Schneidkanten 2, 3, über seine gesamte Länge im Strangpreßverfahren geformt. Er hat zwei sich geradlinig über seine gesamte Länge erstreckende Spanabführungsnuten 4, die sich diametral in bezug auf die Drehachse 5 des Bohrers 1 gegenüberliegen. Ein konisch geschliffener Endabschnitt 6 wird zum Bohren in einen an den Endabschnitt 6 angepaßten Halter 12 eingesetzt. Zwei axial durchgehende Löcher 7 bilden achsparallele Kühlmittelkanäle mit kreisrundem Querschnitt. Die außerhalb der Spanabführungsnuten 4 liegenden Längsseitenbereiche sind im wesentlichen zylindrisch und jeweils mit zwei über die gesamte Länge des Bohrers 1 durchgehenden gleichen Führungsrippen 8, 9 versehen, um die Berührungsfläche zwischen der Seitenwand des Bohrloches und dem Bohrer 1 und damit die Reibung beim Bohren zu vermindern.

Die Spanabführungsnuten 4 und die Nuten 13 zwischen den Führungsrippen 8, 9 sind im Bereich des konischen Endabschnitts 6 mit einem gleichzeitig mit dem Endabschnitt 6 konisch geschliffenen Füllmaterial 14 ausgefüllt, das einen Austritt des über eine koaxiale mit Gewinde versehene Bohrung 15 in den Halter 12 geleiteten Kühlmittels über die Nuten 4 und 13 verhindert und gleichzeitig den Reibschluß zwischen dem Endabschnitt 6 und einem dem Endabschnitt 6 angepaßten Innenkonus 15 des Halters 12 beim Bohren unter dem Bohrdruck erhöht. Bei dem Füllmaterial handelt es sich um einen Zweikomponenten-Kunststoff, der mit dem Metall verklebt und kalt aushärtet. Stattdessen kann auch ein Lot als Füllmaterial verwendet werden. Das Gewinde in der Bohrung 16 gestattet das Einschrauben einer Schraube in den Halter 12 nach dem Ausspannen des Halters 12 aus einem Spannfutter einer Werkzeugsmaschine, um den Bohrer 1 aus dem Halter 12 herauszudrücken.

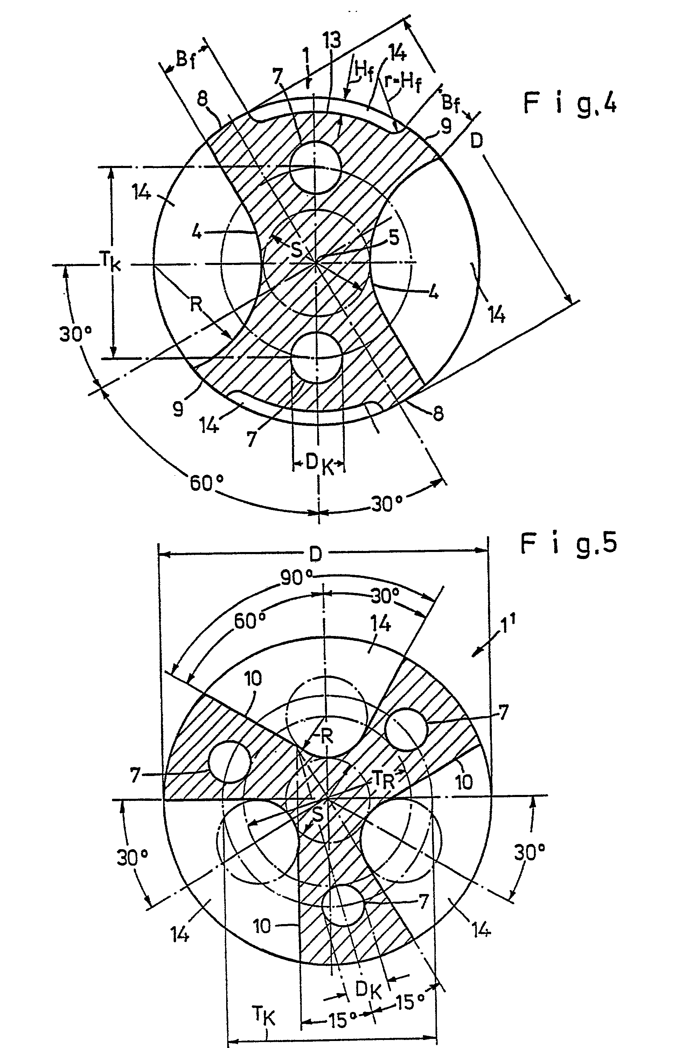

Die genauere Querschnittsform des Bohrers 1 ergibt sich aus Fig. 4 und der nachstehenden Tabelle für beliebige Längen des Bohrers 1 und verschiedene Bohrerdurchmesser D mit

$S$ = Seelen- bzw. Kerndurchmesser

$B_f$ = Breite der Führungsrippen 8,9

$H_f$ = Höhe der Führungsrippen 8,9

$T_k$ = Teilkreisdurchmesser der Kühlmittelkanäle 7 und

$D_k$ = Durchmesser der Kühlmittelkanäle 7.

| D | R | S | $B_f$ | $H_f = r$ | $T_K$ | $D_K$ |
|---|---|---|---|---|---|---|
| 3 | 1 | 1 | 0,5 | 0,2 | 1,5 | 0,5 |
| 4 | 1,25 | 1,5 | 0,7 | 0,2 | 2,3 | 0,6 |
| 5 | 1,5 | 2 | 0,9 | 0,3 | 2,8 | 0,8 |
| 6 | 2 | 2 | 1 | 0,3 | 3,4 | 1 |
| 7 | 2,5 | 2 | 1,2 | 0,3 | 4,4 | 1,2 |
| 8 | 2,5 | 3 | 1,3 | 0,4 | 4,7 | 1,3 |
| 9 | 3 | 3 | 1,5 | 0,4 | 5,3 | 1,4 |
| 10 | 3,5 | 3 | 1,7 | 0,4 | 5,8 | 1,5 |
| 11 | 3,5 | 4 | 1,8 | 0,5 | 6,3 | 1,6 |
| 12 | 4 | 4 | 2 | 0,5 | 7 | 1,8 |

In dieser Tabelle sind alle Maße in Millimeter angegeben.

Bei mit niedriger Drehzahl betriebenen Bohrern können alle Führungsrippen 8, 9 entfallen, wobei die Längsseitenbereiche zwischen den Spanabführungsnuten 4 über ihren gesamten Umfangswinkelbereich den Durchmesser D aufweisen und an der Seitenwand des Bohrloches anliegen. Bei mit hoher Drehzahl betriebenen Bohrern können die nicht an die Schneidkanten 2, 3 angrenzenden Führungsrippen 9 entfallen, um die Reibung an der Wand des Bohrloches zu vermindern.

Die an die Nuten 4 angrenzenden Kanten der Führungsrippen 8 können geschärft sein, so daß die Führungsrippen 8 als Nebenschneiden wirken.

Die in Fig. 4 dargestellte Querschnittsform hat den Vorteil, daß der durch das Strangpressen gebildete, noch weiche Rohling beim Sintern leicht abgestützt werden kann, ohne sich durch sein Eigengewicht zu verformen, beispielsweise dadurch, daß er mit einer seiner Spanabführungsnuten 4 auf einen Zylinder mit dem Radius R aufgelegt wird.

Die Figuren 5 bis 7 zeigen jeweils einen dreischneidigen Bohrer $1^1$, $1^2$ und $1^3$ mit drei Spanabführungsnuten 10 und drei Kühlmittelkanälen 7 lediglich im Querschnitt, da die Schneidengeometrie in herkömmlicher Weise ausgebildet sein kann.

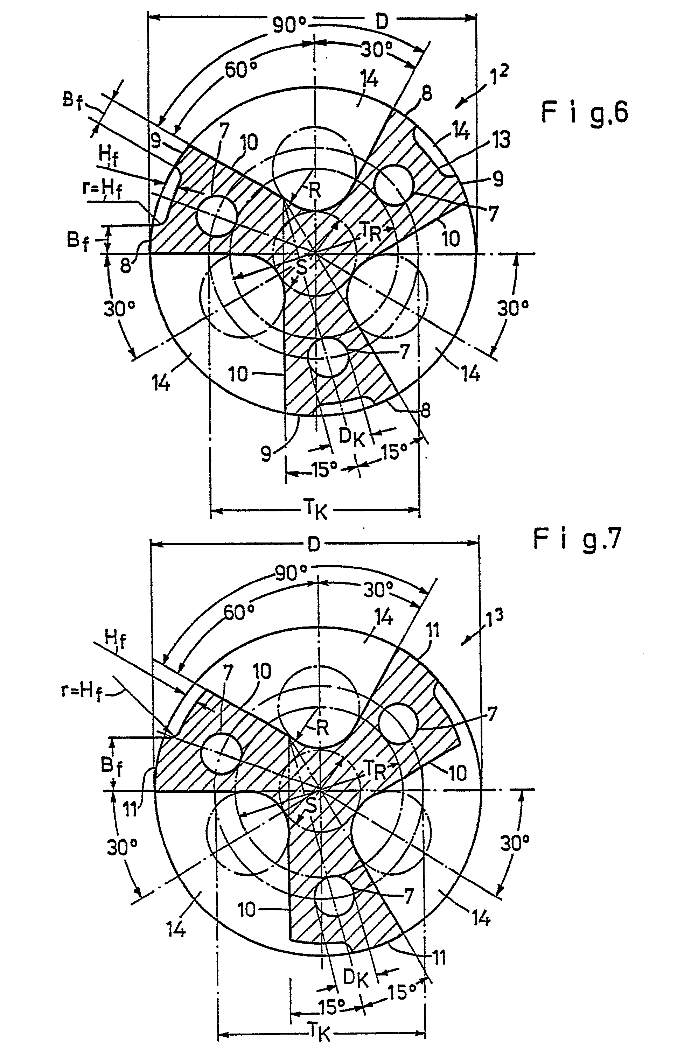

Bei dem für niedrige Drehzahlen vorgesehenen Bohrer $1^1$ nach Fig. 5 sind keine, bei dem für mittlere Drehzahlen vorgesehenen Bohrer $1^2$ nach Fig. 6 sind jeweils zwei Führungsrippen 8, 9 in jedem Längsseitenbereich zwischen benachbarten Spanabführungsnuten 10 und bei dem für höhere Drehzahlen vorgesehenen Bohrer $1^3$ nach Fig. 7 nur eine Führungsrippe 11 in jedem der Längsseitenbereiche vorgesehen. Auch bei diesen Ausführungsbeispielen kann die an die Nut 10 angrenzende Kante der Führungsrippen 8 und 11 bzw. die entsprechende Kante bei dem Ausführungsbeispiel nach Fig. 5 geschärft sein.

Bei allen Ausführungsbeispielen nach den Fig. 5 bis 7 gelten folgende Abmessungsverhältnisse:
$S = 1/4\ D$; $T_R = 1/2\ D$; $R = 1/8\ D$; $T_K = 5/8\ D$ und $D_K = 1/8\ D$, mit $T_R = S + 2R$.

Bei dem Ausführungsbeispiel nach Fig. 6 ist $B_f = 1/12\ D$ und bei dem Ausführungsbeispiel nach Fig. 7 $B_f = 1/6\ D$.

Die Höhe $H_f$ ist bei den Ausführungsbeispielen nach den Fig. 4, 6 und 7 gleich.

Bei den Ausführungsbeispielen nach den Fig. 5 bis 7 sind beim Sintern besondere Stützkörper erforderlich, um ein Verbiegen der zwischen den Spanabführungsnuten 10 liegenden radialen Schenkel unter ihrem Eigengewicht zu vermeiden, doch ergeben diese drei Schenkel zumindest eine (stabile) Dreipunktabstützung des Bohrers im Bohrloch, wenn keine Führungsrippen an den Schenkeln vorgesehen sind oder nur eine Führungsrippe an jedem Schenkel vorgesehen ist.

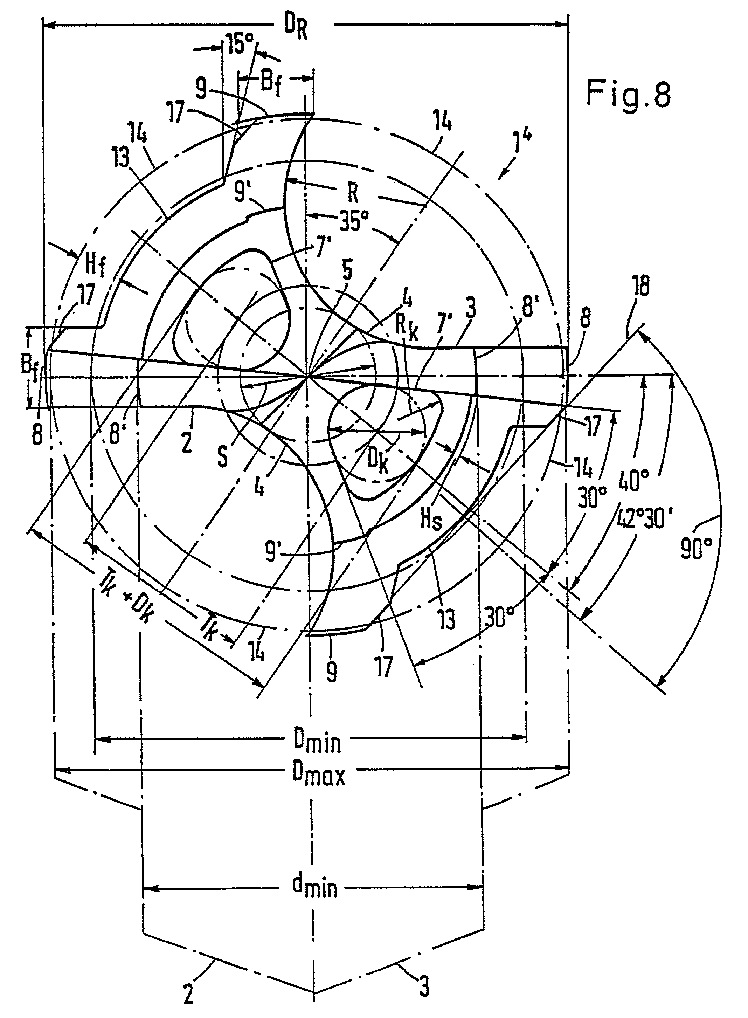

Fig. 8 stellt einen Stufenbohrer $1^4$ in Vorderansicht und den Umriß seines vorderen Endabschnitts schematisch durch strichpunktierte Linien in Seitenansicht als Rohling vor dem Einfüllen des Füllmaterials 14 dar. Dieses Ausführungsbeispiel entspricht im wesentlichen dem Ausführungsbeispiel nach Fig. 4. Statt einer kreisrunden haben die Kühlmittelkanäle 7' jedoch eine etwa dreieckförmige Querschnittsform mit abgerundeten Ecken, wobei die eine Ecke einen größeren Rundungsradius $D_K/2$ als die beiden anderen Ecken aufweist und innerhalb eines Umkreises mit dem Seelen- oder Kerndurchmesser S um die Längsmittel- bzw. Drehachse 5 des Werkzeugs $1^4$ liegt, der die Spanabführungsnuten 10 im tiefsten oder radial innersten Querschnittspunkt tangiert. Die beiden anderen Ecken mit dem kleineren Rundungsradius $R_K$ liegen außerhalb eines Umkreises mit dem Durchmesser $D_K$ um den Krümmungsmittelpunkt der Ecke mit dem größten Rundungsradius. Bei gleichem Durchmesser $D_K$ haben die Kühlmittelkanäle 7' daher eine größere Querschnittsfläche als die Kühlmittelkanäle 7. Außerdem liegen die Kühlmittelkanäle 7' weiter radial innen als die Kühlmittelkanäle 7, so daß ihre im Halter 12 liegenden Kühlmitteleintrittsöffnungen auch bei einem - zur Erzielung einer höheren Klemmkraft - längeren konischen Einspannabschnitt am Werkzeug und entsprechend längerem Innenkonus 15 des Halters 12 nicht durch den Innenkonus 15 verdeckt und versperrt werden. Bei gleicher Querschnittsfläche der Kühlmittelkanäle 7' wie die der Kühlmittelkanäle 7 und entsprechend kleineren Rundungsradien $D_K/2$ und $R_K$ können die Kühlmittelkanäle 7' noch weiter radial innen liegen.

Sodann kann der vordere Abschnitt des Stufenbohrers $1^4$ mit dem kleinsten Durchmesser $d_{min}$ entsprechend der radial weiter inneren Lage der Kühlmittelkanäle 7' in einem größeren Bereich kleiner als der anschließende Stufenbohrerabschnitt mit dem größten Durchmesser $D_{max}$ gewählt werden. Der Durchmesser dieses Stufenbohrerabschnitts kann ferner ebenfalls in einem verhältnismäßig großen Bereich zwischen $D_{max}$ und $D_{min}$ unterschiedlich gewählt werden.

Die Führungsrippen 8 und 9 können jeweils an ihren den Nuten 13 benachbarten Kanten eine Fase 17 aufweisen, deren Ebene den auf einem Umkreis um die Drehachse 5 liegenden Nutengrund der jeweils zwischen diesen Fasen 17 liegenden Nut 13 tangiert, so daß der noch weiche Rohling des Stufenbohrers $1^4$ nach dem Strangpressen an drei Stellen auf einer ebenen, als gerade Linie angedeuteten Unterlage 18 abgestützt werden kann.

Auch der vordere, den kleinsten Durchmesser $d_{min}$ aufweisende Abschnitt des Stufenbohrers $1^4$ kann eine axiale Nut 13' und Führungsrippen 8' bzw. 9' mit der Höhe $H_s$ aufweisen.

Der Stufenbohrer $1^4$ nach Fig. 8 kann beispielsweise die in der nachstehenden Tabelle und der Zeichnung angegebenen Abmessungen haben, wobei neben den bereits erwähnten Größenbezeichnungen mit

DR der Durchmesser des Rohlings bezeichnet ist, wobei die Maße in der Tabelle wiederum in mm angegeben sind.

| $D_R$ | Ø-Bereich | | S | R | $B_f$ | $H_f$ | Kühlmittelloch | | | Stufen-Ø | | Anwendung |
|---|---|---|---|---|---|---|---|---|---|---|---|---|
| | $D_{min}$ | $D_{max}$ | | | | | $T_K$ | $D_K$ | $R_K$ | $d_{min}$ | $H_s$ | |
| 4,3 | 3,5 | 4,2 | 1,12 | 1,16 | 0,66 | 0,40 | 1,49 | 0,83 | 0,16 | 2,80 | 0,02 | M 3,5 |
| 5,0 | 4,1 | 4,9 | 1,31 | 1,35 | 0,77 | 0,46 | 1,73 | 0,97 | 0,19 | 3,27 | 0,025 | M 4 |
| 5,9 | 4,8 | 5,75 | 1,54 | 1,59 | 0,91 | 0,54 | 2,04 | 1,13 | 0,22 | 3,83 | 0,03 | M 5 |
| 6,9 | 5,65 | 6,75 | 1,80 | 1,86 | 1,06 | 0,64 | 2,39 | 1,33 | 0,26 | 4,50 | 0,05 | M 6 |
| 8,1 | 6,65 | 7,95 | 2,12 | 2,19 | 1,25 | 0,75 | 2,81 | 1,57 | 0,31 | 5,30 | 0,05 | |
| 9,6 | 7,85 | 9,4 | 2,51 | 2,59 | 1,48 | 0,89 | 3,33 | 1,85 | 0,37 | 6,20 | 0,1 | M 8 |
| 11,3 | 9,3 | 11,1 | 2,96 | 3,06 | 1,75 | 1,05 | 3,93 | 2,19 | 0,43 | 7,40 | 0,1 | M 10 |
| 13,3 | 11 | 13,1 | 3,50 | 3,62 | 2,06 | 1,24 | 4,64 | 2,56 | 0,51 | 8,73 | 0,15 | M 12 |
| 15,8 | 13 | 15,6 | 4,17 | 4,31 | 2,46 | 1,47 | 5,52 | 3,07 | 0,61 | 10,4 | 0,15 | (M 14) |
| 18,8 | 15,5 | 18,6 | 4,97 | 5,13 | 2,93 | 1,76 | 6,58 | 3,66 | 0,73 | 12,4 | 0,2 | M 16 |

## Patentansprüche

1. Einteiliges spanabhebendes Werkzeug, wie Bohrer oder Fingerfräser, aus gesintertem Hartmetall, der stirnseitig angeschliffene Schneidkanten, in den Längsseiten ausgebildete Spanabführungsnuten und einen Einspannabschnitt am hinteren Ende zur Aufnahme in einer diesem angepaßten Aufnahmeöffnung eines Halters aufweist und der über seine gesamte Länge im Strangpreßverfahren geformt ist, **dadurch gekennzeichnet,** daß das Werkzeug (1; 1¹; 1²; 1³; 14) beim Strangpressen ausgebildete, über seine gesamte axiale Länge durchgehende Löcher (7;7′) als Kühlmittelkanäle aufweist, daß die Spanabführungsnuten (4; 10) im Bereich des Einspannabschnitts (6) mit einem Füllmaterial (14) ausgefüllt sind und daß der Einspannabschnitt (6) konisch geschliffen ist.

2. Werkzeug nach Anspruch 1, **dadurch gekennzeichnet,** daß die außerhalb der Spanabführungsnuten (4; 10) liegenden Längsseitenbereiche des Bohrers jeweils wenigstens eine beim Strangpressen ausgebildete Führungsrippe (8; 9; 8′; 9′; 11) aufweisen und der an die Führungsrippe angrenzende Raum bzw. die Nuten (13; 13′) zwischen den Führungsrippen im Bereich des Einspannabschnitts (6) mit Füllmaterial (14) ausgefüllt ist bzw. sind.

3. Werkzeug nach Anspruch 1, **dadurch gekennzeichnet,** daß das Füllmaterial (14) mit Metall verklebbarer Kunststoff oder Lot ist.

4. Werkzeug nach einem der Ansprüche 1 bis 3, **dadurch gekennzeichnet,** daß die Querschnittsform der Kühlmittelkanäle (7′) etwa dreieckförmig ist und die eine Ecke näher bei der Längsmittelachse (5) als die beiden anderen Ecken und innerhalb eines Umkreises um die Längsmittelachse (5) liegt, der den tiefsten Querschnittspunkt der Spanabführungsnuten (4) tangiert.

## Claims

1. One-piece metal-cutting tool, such as drill or shank end milling cutter, of sintered hard metal and displaying cutting edges ground on at an end face, swarf removal grooves formed in the longitudinal sides and a clamping portion at the rear end for the reception in a receiving opening, which is adapted thereto, of a holder and being shaped over its entire length in an extrusion process, characterised thereby, that the tool (1; 1¹; 1²; 1³; 14) displays holes (7; 7′), which are formed during the extrusion and penetrate it over its entire axial length, as coolant channels, that the swarf removal grooves (4, 10) are filled by a filling material (14) in the region of the clamping portion (6) and that the clamping portion (6) is ground to be conical.

2. Tool according to claim 1, characterised thereby, that those longitudinal side regions of the drill, which lie outside the swarf removal grooves (4, 10), each display a respective guide rib (8; 9; 8′; 9′; 11) formed during the extrusion and the space adjoining the guide rib or the grooves (13; 13′) between the guide ribs is or are filled by a filling material (14) in the region of the clamping portion (6).

3. Tool according to claim 1, characterised thereby, that the filling material (14) is synthetic material or solder cementable to metal.

4. Tool according to one of the claims 1 to 3, characterised thereby, that the cross-sectional shape of the coolant channels (7') is about triangular and the one corner lies nearer to the longitudinal centre line (5) than both the other corners and within a circle about the longitudinal centre line (5), which circle is tangential to the lowest cross-sectional point of the swarf removal grooves (4).

**Revendications**

1. Outil d'une pièce pour usinage avec enlèvement de copeaux tel que foret ou fraise à queue en métal dur fritté, qui présente des arêtes de coupe aiguisées sur la face frontale, dans lequel des rainures d'évacuation de copeaux sont disposées dans les faces longitudinales et où une section de serrage est prévue à l'extrémité postérieure pour être introduite dans un orifice de réception adapté d'un porte-outil et qui est formée sur toute sa longueur par un procédé d'extrusion, caractérisé en ce que l'outil (1; 1¹; 1²; 1³; 14) présente des trous de part en part (7, 7') formés sur toute sa longueur axiale au cours de l'extrusion et servant de canaux de refroidissement, en ce que les rainures d'évacuation de copeaux (4, 10) sont remplies d'un matériau de remplissage (14) dans la zone de la section de serrage (6) et que la section de serrage (6) est meulée en forme de cône.

2. Outil selon la revendication 1, caractérisé en ce que les zones des faces longitudinales du foret situées en dehors des rainures d'évacuation de copeaux (4, 10) présentent chacune au moins une nervure de guidage (8, 9; 8', 9'; 11) formée au cours de l'extrusion et que l'espace avoisinant la nervure de guidage ou les rainures (13, 13') entre les nervures de guidage est rempli de matériau de remplissage (14) dans la zone de la section de serrage (6).

3. Outil selon la revendication 1, caractérisé en ce que le matériau de remplissage (14) est une matière plastique pouvant être collée au métal ou de la soudure tendre.

4. Outil selon l'une des revendications 1 à 3, caractérisé en ce que la section des canaux de refroidissement (7, 7') présente une forme triangulaire et qu'un des angles est plus proche de l'axe longitudinal (5) que les deux autres angles et est situé·dans un périmètre autour de l'axe longitudinal (5) qui est tangent du point le plus profond de la section des rainures d'évacuation des copeaux (4).

F i g.1

F i g.2

Fig.3

EP 0 257 372 B1

Fig.4

Fig.5

EP 0 257 372 B1

Fig.6

Fig.7

Fig.8